# EUROPEAN PATENT APPLICATION

(11) **EP 4 744 808 A1**
(43) Date of publication of application: **20.05.2026**
(21) Application number: 25213612.2
(22) Date of filing: 05.11.2025
(51) Int. Cl.: B23D 45/10, B23D 59/00, B27B 5/075, B27G 19/10

(54) **METHOD AND APPARATUS FOR ALIGNING A CUTTING BLADE AND A SCORER OF A CUTTING MACHINE FOR PANELS MADE OF WOOD, PLASTIC OR THE LIKE**

(30) Priority: 14.11.2024 IT 202400025752
(71) Applicant: BIESSE S.p.A., 61122 Pesaro (IT)
(72) Inventor: VICHI, Alessandro, 61122 PESARO (IT); SANTOLINI, Fernando, 61122 PESARO (IT)
(74) Representative: Studio Torta S.p.A.

(57) **Abstract**

Method and apparatus for aligning a cutting blade (16) and a scorer (17) of a cutting machine, according to which the cutting blade (16) and the scorer (17) are lifted through a measuring plane (M) parallel to a support plane (P) of the panels (2) to measure the thickness of the scorer (17) and a width (L) of the assembly defined by the cutting blade (16) and by the scorer (17), and the scorer (17) is displaced parallel to itself firstly until the width (L) is equal to the thickness of the scorer (17) and consequently with a displacement that is smaller than the difference (D) between the thicknesses of the cutting blade (16) and of the scorer (17).

## Description

### CROSS-REFERENCE TO RELATED APPLICATIONS

This patent application claims priority from Italian patent application no. 102024000025752 filed on November 14, 2024, the entire disclosure of which is incorporated herein by reference.

### TECHNICAL FIELD

The present invention relates to a method for aligning a cutting blade and a scorer of a cutting machine for panels made of wood, plastic or the like.

### BACKGROUND

In the field of machining panels made of wood, plastic, or the like, it is known to provide a cutting machine comprising a support frame defining a substantially horizontal support plane for at least one panel made of wood or the like; a cutting station; at least one pushing member to move a pack of panels in a first direction through the cutting station; and a cutting device mounted in the cutting station to move in a second direction and along a cutting plane perpendicular to the first direction so as to cut the panels.

The support plane is defined by a roller device mounted upstream of the cutting station, and by an output table mounted downstream of the cutting station.

The cutting device comprises a cutting blade and a scorer mounted on a support carriage suitable to move the cutting blade and the scorer in the second direction with an alternating rectilinear motion comprising a forward stroke, during which the scorer, arranged in front of the cutting blade in the second direction, scores the lower surface of the pack of panels and the cutting blade cuts the entire pack of panels, and a return stroke.

The cutting blade is mounted to rotate around a first rotation axis parallel to the first direction, is provided with a plurality of first cutting teeth distributed around the first rotation axis, and is axially limited by two end planes tangent to the first cutting teeth and perpendicular to the first direction.

The scorer is mounted to rotate around a second rotation axis parallel to the first rotation axis, is provided with a plurality of second cutting teeth distributed around the second rotation axis, and is axially limited by two end planes tangent to the second cutting teeth and perpendicular to the first direction.

The scorer is slidably coupled to the support carriage to carry out, relative to the support carriage, rectilinear displacements in the first direction and in a third direction orthogonal to the aforesaid first and second direction, and the cutting blade is slidably coupled to the support carriage to carry out, relative to the support carriage, rectilinear displacements in the third direction independently from the scorer.

Since the cutting blade normally has a much shorter useful life than the useful life of the scorer and must be frequently replaced, the cutting blade and the scorer are aligned with each other through an optical system, which measures the distances of the aforesaid end planes from a reference plane parallel to the cutting plane, and controls alignment of the cutting blade with the scorer so as to centre the cut made by the cutting blade inside the score made by the scorer.

Known cutting machines of the type described above have some drawbacks, mainly deriving from the fact that measuring the distances of the aforesaid end planes from the aforesaid reference plane requires relatively complex and costly tooling and calibration operations of the optical system which, although thoroughly tested, are somewhat inaccurate and lengthy.

### SUMMARY

The object of the present invention is to provide a method for aligning a cutting blade and a scorer of a cutting machine for panels made of wood, plastic or the like that is without the drawbacks described above and is simple and inexpensive to implement.

According to the present invention, there is provided a method for aligning a cutting blade and a scorer of a cutting machine for panels made of wood, plastic or the like as claimed in claims 1 to 12.

The present invention also relates to an apparatus for aligning a cutting blade and a scorer of a cutting machine for panels made of wood, plastic or the like.

According to the present invention, there is provided an apparatus for aligning a cutting blade and a scorer of a cutting machine for panels made of wood, plastic or the like as claimed in claim 13.

### BRIEF DESCRIPTION OF THE FIGURES

The present invention will now be described with reference to the accompanying drawings, which illustrate a non-limiting embodiment thereof, wherein:
Fig. 1 is a schematic perspective view, with parts removed for clarity, of a preferred embodiment of the cutting machine of the present invention;
Fig. 2 is a schematic side view, with parts removed for clarity, of a detail of the cutting machine of Fig. 1;
Fig. 3 is a schematic plan view, with parts removed for clarity, of a detail of Fig. 2;
Fig. 4 is a schematic perspective view, with parts removed for clarity, of a detail of Figs. 2 and 3;
Fig. 5 is a schematic side view, with parts removed and parts enlarged for clarity, of a detail of Fig. 4;
Fig. 6 schematically illustrates a first operating mode of the detail of Fig. 4; and
Fig. 7 schematically illustrates a second operating mode of the detail of Fig. 4.

### DESCRIPTION OF EMBODIMENTS

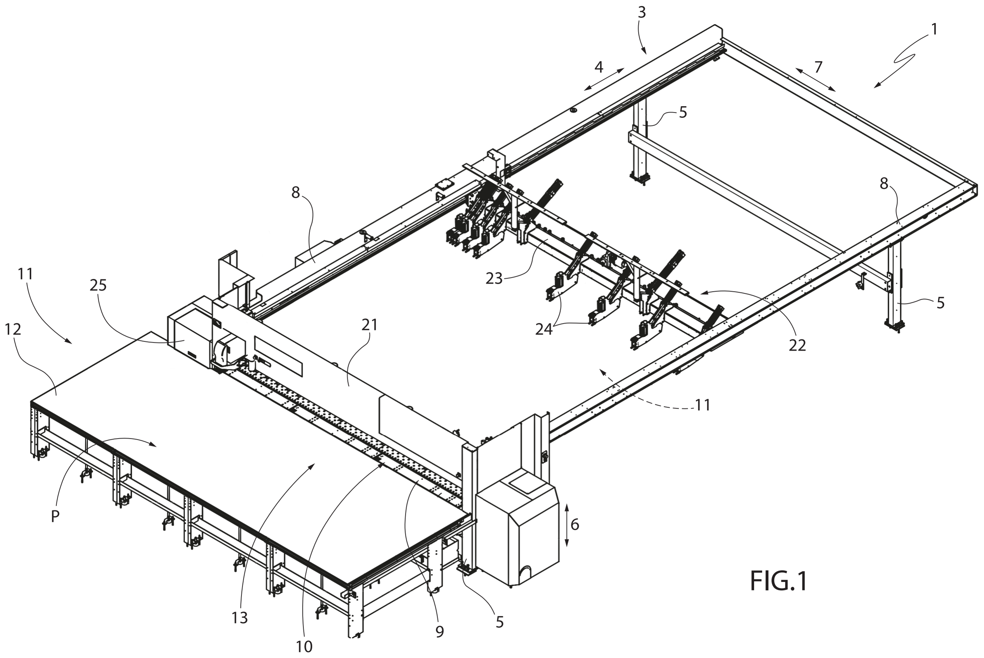

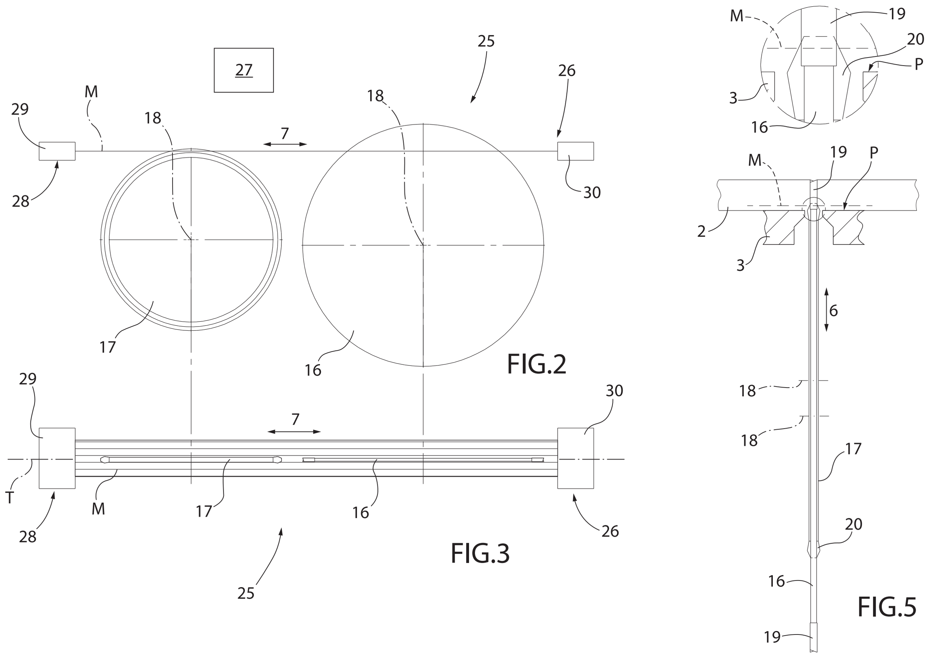

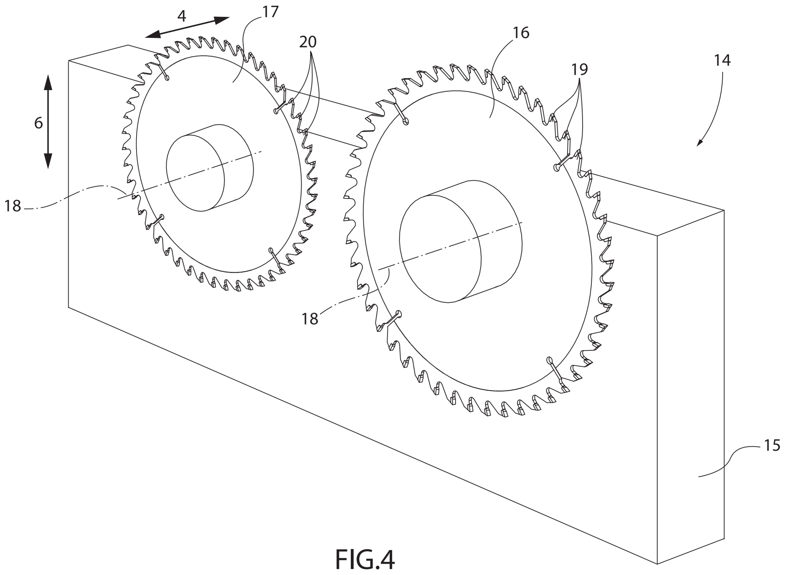

With reference to Figs. 1 to 5, the reference number 1 indicates, as a whole, a cutting machine for cutting flat panels 2 made of wood, plastic, or the like of substantially rectangular shape (Fig. 5).

The machine 1 comprises a portal frame 3, which substantially has the shape of a parallelepiped with a rectangular base, extends in a horizontal direction 4, and is provided with four vertical edges, each defined by a respective upright 5 parallel to a vertical direction 6 transverse to the direction 4.

Each upright 5 is aligned with a corresponding upright 5 in the direction 4 and with a corresponding upright 5 in a horizontal direction 7 orthogonal to the directions 4 and 6.

The frame 3 further comprises two longitudinal guide members 8 parallel to each other, each of which extends in the direction 4, and connects two corresponding uprights 5 to each other; a crosspiece 9, which extends in the direction 7, is limited by a flat upper face 10 perpendicular to the direction 6, and connects two of the four uprights 5 to each other; and two support devices 11 (only one of which is shown in Fig. 1), which are arranged on opposite sides of the crosspiece 9 in the direction 4, and define, together with the face 10, a substantially horizontal support plane P for the panels 2.

The device 11 upstream of the crosspiece 9 comprises a plurality of roller bars (not shown) parallel to one another and to the direction 4, and the device 11 downstream of the crosspiece 9 comprises an output table 12.

The machine 1 further comprises a cutting station 13, which is obtained at the crosspiece 9 and relative uprights 5, and is provided with a cutting assembly 14 of known type to cut the panels 2.

The assembly 14 comprises a carriage 15 coupled in a known way to the crosspiece 9 to carry out, relative to the frame 3 and under the thrust of an operating device, known and not shown, rectilinear displacements in the direction 7, and is provided with a cutting blade 16 and with a scorer 17 mounted to rotate around respective rotation axes 18 parallel to each other and to the direction 4.

The blade 16 and the scorer 17 are coupled to the carriage 15 to carry out, relative to the carriage 15 and under the thrust of respective operating devices (not shown) independent from each other, rectilinear displacements in the direction 6 between related lowered rest positions, in which the blade 16 and the scorer 17 are arranged under the plane P to allow the panels 2 to move along the plane P, and related lifted operating positions, in which the blade 16 and the scorer 17 protrude through the crosspiece 9 above the plane P to cut the panels 2.

The scorer 17 is also coupled to the carriage 15 to carry out, relative to the carriage 15, rectilinear displacements in the direction 4.

The blade 16 and the scorer 17 are moved by the carriage 15 along a cutting plane T obtained through the crosspiece 9 perpendicularly to the direction 4 with an alternating rectilinear movement comprising a forward stroke, in which the scorer 17, arranged in front of the blade 16 in the direction 7 of movement of the assembly 14, scores the panel 2 arranged on the plane P and the blade 16 cuts the panels 2, and a return stroke.

The blade 16 is provided with a plurality of cutting teeth 19, which are evenly distributed along a perimeter edge of the blade 16 and around the related axis 18, and have a cross section of rectangular shape and a constant thickness S1.

The scorer 17 is provided with a plurality of cutting teeth 20, which are evenly distributed along a perimeter edge of the scorer 17 and around the related axis 18, and have a cross-section of trapezoidal shape of variable thickness comprising a diverging inner section and a converging outer section.

The assembly 14 cooperates with a pressing device 21 of known type, which extends above the plane P in the direction 7, and is movable, relative to the frame 3, in the direction 6 between a lifted rest position and a lowered operating position, in which the panels 2 are blocked on the plane P to be cut by the assembly 14 parallel to the direction 7.

The machine 1 further comprises at least one pushing unit 22 to move the panels 2 along the plane P and through the station 13 in both senses of the direction 4.

The pushing unit 22 comprises a motorized carriage 23, which is mounted above the plane P, extends between the two longitudinal guide members 8 in the direction 7, and is movable along the longitudinal guide members 8 in the direction 4 under the thrust of an operating device, known and not shown.

The carriage 23 supports a plurality of clamp gripping members 24, which are distributed along the carriage 23 in the direction 7, and are, preferably but not necessarily, movable along the carriage 23 in the direction 7 during a tooling step of the pushing unit 22.

Each member 24 is also movable between a lifted rest position and a lowered operating position, and has the shape of a gripper comprising a lower jaw and an upper jaw, movable relative to each other between a clamping position and a release position of at least one panel 2.

The machine 1 further comprises a tool-changing station 25, which is associated with the station 13, is aligned with the station 13 in the direction 7, and is configured to replace the blade 16 and the scorer 17.

The station 25 is provided with a measuring device 26 connected with the electronic control unit 27 of the machine 1.

The device 26 comprises, in this case, a laser profilometer 28 comprising an emitter 29 and a receiver 30, which are aligned with each other in the direction 7, define a measuring plane M parallel to the plane P, and are mounted on opposite sides of the assembly defined by the blade 16 and by the scorer 17 when the cutting assembly 14 is moved in the station 25.

According to some variants, not shown:
the plane M coincides with the plane P; and
the device 26 comprises a video camera, whose images are processed by the unit 27 in the measuring plane M.

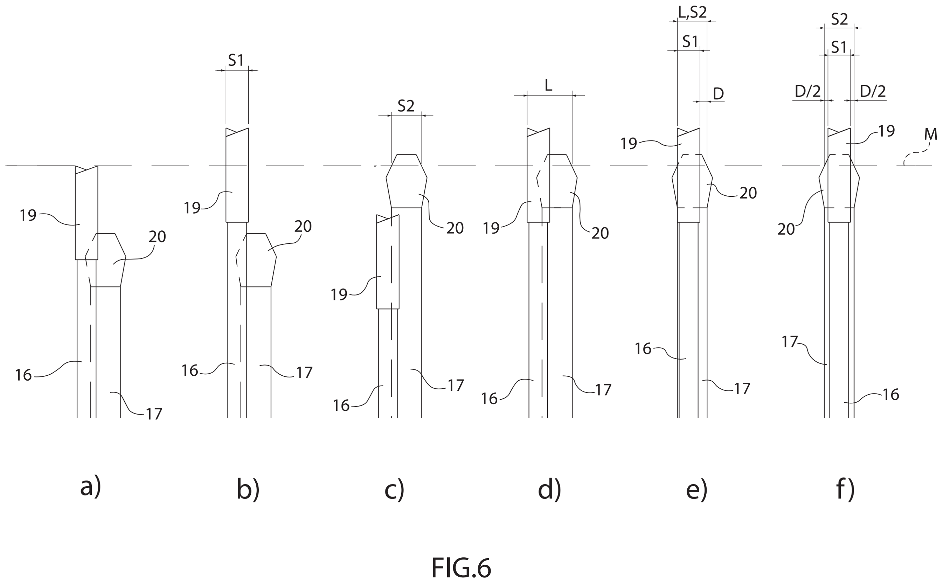

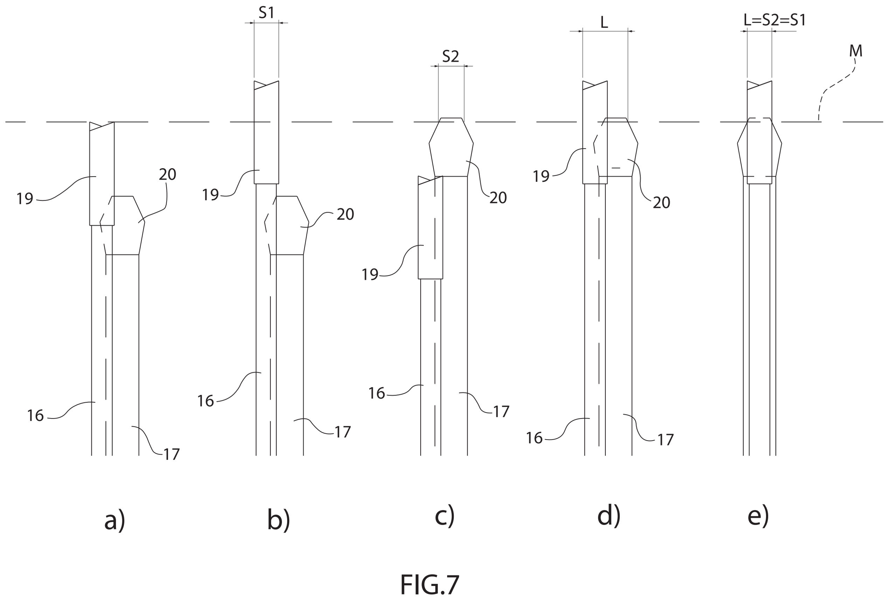

After the cutting assembly 14 has been moved to the station 25 and the blade 16 and/or the scorer 17 has been replaced, the blade 16 and the scorer 17 are aligned, starting from the instant in which the blade 16 and the scorer 17 are arranged in the related lowered rest positions. In particular, the unit 27 is configured to implement a method for aligning the blade 16 and the scorer 17, such method being described in detail below, with reference to Figs. 6 and 7.

A first method, shown in Fig. 6, comprises the steps of:
continuously or intermittently lifting the scorer 17 in the direction 6 through the related operating device (not shown) so as to move at least one tooth 20 through the plane M (Fig. 6c); during, or at the end of, the lifting of the scorer 17 in the direction 6, measuring the thickness of the tooth 20 in the plane M (Fig. 6c);
stopping the lifting of the scorer 17 in the direction 6 when the tooth 20 has, in the plane M, a thickness S2 greater than the thickness S1 of the teeth 19, i.e. a thickness S2 equal to the sum of the thickness S1 and of a difference D between the amount of material removed by the scorer 17 and the amount of material removed by the blade 16 (Figs. 6b and 6c);
continuously or intermittently lifting the blade 16 in the direction 6 through the related operating device (not shown) so as to move at least one tooth 19 through the plane M (Fig. 6d); and
during, or at the end of, the lifting of the blade 16 in the direction 6, measuring a width L of the assembly defined by the blade 16 and by the scorer 17 in the plane M (Fig. 6d).

When the blade 16 and the scorer 17 are staggered in the direction 4 and, consequently, the width L is greater than the thickness S2 (Fig. 6d), the method also comprises the further steps of:
continuously or intermittently moving the scorer 17 in the direction 4 through the related operating device (not shown) and, at the same time, measuring the width L until the width L is equal to the thickness S2 (Fig. 6e); and
continuously or intermittently moving the scorer 17 further in the direction 4 with a displacement that is smaller than the difference D between the thickness S2 and the thickness S1, in particular a displacement equal to D/2 when the cut of the blade 16 and of the scorer 17 must be symmetrical and a displacement different than D/2 when the cut of the blade 16 and of the scorer 17 must be asymmetrical (Fig. 6f).

On the contrary, when the blade 16 and the scorer 17 are superimposed in the direction 4 and, consequently, the width L is equal to the thickness S2, the method also comprises the further steps of:
continuously or intermittently moving the scorer 17 in the direction 4 through the related operating device (not shown) and, at the same time, measuring the width L until the width L is greater than the thickness S2 (Fig. 6d);
continuously or intermittently moving the scorer 17 further in the direction 4 and, at the same time, measuring the width L until the width L is once again equal to the thickness S2 (Fig. 6e); and
finally, continuously or intermittently moving the scorer 17 in the direction 4 with a displacement that is smaller than the difference D between the thickness S2 and the thickness S1, in particular a displacement equal to D/2 when the cut of the blade 16 and of the scorer 17 must be symmetrical and a displacement different than D/2 when the cut of the blade 16 and of the scorer 17 must be asymmetrical (Fig. 6f).

A second method, shown in Fig. 7, comprises the steps of:
continuously or intermittently lifting the scorer 17 in the direction 6 through the related operating device (not shown) so as to move at least one tooth 20 through the plane M (Fig. 7c); during, or at the end of, the lifting of the scorer 17 in the direction 6, measuring the thickness of the tooth 20 in the plane M (Fig. 7c);
stopping the lifting of the scorer 17 in the direction 6 when the tooth 20 has, in the plane M, a thickness S2 equal to the thickness S1 of the teeth 19 (Fig. 7c);
continuously or intermittently lifting the blade 16 in the direction 6 through the related operating device (not shown) so as to move at least one tooth 19 through the plane M (Fig. 7d); and
during, or at the end of, the lifting of the blade 16 in the direction 6, measuring a width L of the assembly defined by the blade 16 and by the scorer 17 in the plane M (Fig. 7d).

When the blade 16 and the scorer 17 are staggered in the direction 4 and, consequently, the width L is greater than the thickness S2 (Fig. 7d), the method also comprises the further step of:
continuously or intermittently moving the scorer 17 in the direction 4 through the related operating device (not shown) and, at the same time, measuring the width L until the width L is equal to the thickness S2 (Fig. 7e).

On the contrary, when the blade 16 and the scorer 17 are superimposed in the direction 4 and, consequently, the width L is equal to the thickness S2 (Fig. 7e), the blade 16 and the scorer 17 are aligned.

With regard to the above, it should be specified that:
when the characteristics of the scorer 17 are already known as they are provided by the manufacturer or measured previously and, consequently, the position of the axis 18 of the scorer 17 in the direction 6 in which the tooth 20 of the scorer 17 has the thickness S2 is known, the two methods do not require the thickness of the tooth 20 to be measured;
during the alignment, the blade 16 and the scorer 17 are stopped or are rotating around the related axes 18;
the thickness S1 of the teeth 19 is either provided by the manufacturer and stored in the unit 27 or measured through the measuring device 26 lifting a tooth 19 of the blade 16 through the plane M (Figs. 6a, 6b; 7a, 7b);
when the tooth 20 has, in the plane M, the thickness S2, the position of the axis 18 of the scorer 17 in the direction 6 is stored so as to guarantee the correct positioning of the scorer 17 in the direction 6 during machining of the panels 2 and, consequently, removal of the thickness S2 of material; and
the position of the scorer 17 in the direction 4 is stored to be used subsequently, for example during machining of the panels 2.

The measuring device 26 and the electronic control unit 27 also allow the diameter of the blade 16 to be measured.

In fact, knowing the distance between the plane P and the plane M, having selected the initial distance between the rotation axis 18 of the blade 16 and the plane P during the step of tooling the cutting assembly 14, and having calculated the distance between the axis 18 of the blade 16 and the plane M:
the blade 16 is lifted in the direction 6;
the displacement of the axis 18 of the blade 16 in the direction 6 is measured through an encoder associated with the related operating device (not shown) when the tooth 19 is tangent to the plane M; and
the radius of the blade 16 is calculated as difference between the calculated distance between the axis 18 of the blade 16 and the plane M and the measured displacement of the axis 18 of the blade 16.

The measuring device 26 and the electronic control unit 27 further allow:
lifting the blade 16 in the direction 6 through the related operating device (not shown) so as to move the entire tooth 19 through the plane M; and
during the lifting of the blade 16 in the direction 6, continuously measuring the thickness of the entire tooth 19 in the plane M so as to reconstruct the actual profile of the tooth 19, compare it with a nominal profile stored in the unit 27, and detect any defects and/or chips of the tooth 19.

Moreover, by rotating the blade 16 around the related axis 18, the device 26 allows reconstruction of the actual profile of the blade 16, comparing it with a nominal profile stored in the unit 27, and verifying of any oscillations of the blade 16 during its rotation around the axis 18.

The measuring device 26 and the electronic control unit 27 further allow:
the lifting of the scorer 17 in the direction 6 through the related operating device (not shown) so as to move the entire tooth 20 through the plane M; and
during the lifting of the scorer 17 in the direction 6, continuously measuring the thickness of the entire tooth 20 in the plane M so as to reconstruct the actual profile of the tooth 20, compare it with a nominal profile stored in the unit 27, and detect any defects and/or chips of the tooth 20.

Moreover, by rotating the scorer 17 around the related axis 18, the device 26 allows reconstruction of the actual profile of the scorer 17, comparing it with a nominal profile stored in the unit 27, and verifying any oscillations of the scorer 17 during its rotation around the axis 18.

## Claims

1. A method for aligning a cutting blade (16) and a scorer (17) of a cutting machine for panels (2) made of wood, plastic or the like comprising a cutting station (13), at least one pushing unit (22) to move at least one panel (2) along a support plane (P), through the cutting station (13) and in a first direction (4), and a cutting assembly (14) mounted in the cutting station (13) and comprising, in turn, a support carriage (15), which is movable in a second direction (7) and along a cutting plane (T) substantially perpendicular to the first direction (4) and supports a cutting blade (16) and a scorer (17), which are movable, relative to the support carriage (15), in a third direction (6) orthogonal to said first and second directions (4, 7), the cutting blade (16) being provided with a plurality of first cutting teeth (19) having a first thickness (S1) and the scorer (17) being provided with a plurality of second cutting teeth (20) with a variable thickness; the method comprising the steps of:
continuously or intermittently lifting the scorer (17) in the third direction (6) through a measuring plane (M) parallel to, or coinciding with, the support plane (P);
stopping the lifting of the scorer (17) in the third direction (6), when a second cutting tooth (20) has, in the measuring plane (M), a second thickness (S2) greater than, or equal to, the first thickness (S1);
continuously or intermittently lifting the cutting blade (16) in the third direction (6) so as to move at least one first cutting tooth (19) through the measuring plane (M);
during, or at the end of, the lifting of the cutting blade (16) in the third direction (6), measuring a width (L) of the assembly defined by the cutting blade (16) and the scorer (17) in the measuring plane (M);
when the second thickness (S2) is greater than the first thickness (S1):
when said width (L) is equal to the second thickness (S2),
continuously or intermittently moving the scorer (17) in the first direction (4) and, at the same time, measuring said width (L) until said width (L) is greater than the second thickness (S2);
continuously or intermittently moving the scorer (17) in the first direction (4) and, at the same time, measuring said width (L) until said width (L) is equal to the second thickness (S2); and
moving the scorer (17) in the first direction (4) with a displacement that is smaller than a difference (D) between the second thickness (S2) and the first thickness (S1); or
when the second thickness (S2) is equal to the first thickness (S1):
continuously or intermittently moving the scorer (17) in the first direction (4) and, at the same time, measuring said width (L) until said width (L) is equal to the second thickness (S2).

2. The method according to claim 1 and further comprising the step of:
during, or at the end of, the lifting of the scorer (17) in the third direction (6), measuring the thickness of the second cutting tooth (20) in the measuring plane (M).

3. The method according to claim 1 or 2, wherein, when the second thickness (S2) is greater than the first thickness (S1), the scorer (17) is moved in the first direction (4) with a displacement equal to half the difference (D) between the second thickness (S2) and the first thickness (S1).

4. The method according to claim 1 or 2, wherein, when the second thickness (S2) is greater than the first thickness (S1), the scorer (17) is moved in the first direction (4) with a displacement that is smaller than, or greater than, half the difference (D) between the second thickness (S2) and the first thickness (S1).

5. The method according to any one of the preceding claims and further comprising, before the step of lifting the scorer (17) in the third direction (6), the steps of:
lifting the cutting blade (16) in the third direction (6) so as to move at least one first cutting tooth (19) through the measuring plane (M);
measuring the first thickness (S1) of the first cutting tooth (19) in the measuring plane (M); and
lowering the cutting blade (16) in the third direction (6) and under the measuring plane (M).

6. The method according to claim 5 and further comprising the steps of:
when the first cutting tooth (19) is tangent to the measuring plane (M), measuring a displacement of a rotation axis (18) of the cutting blade (16); and
calculating the diameter of the cutting blade (16) based on the measured displacement.

7. The method according to any one of the preceding claims and further comprising the steps of:
lifting the scorer (17) in the third direction (6) so as to move the entire second cutting tooth (20) through the measuring plane (M); and
during the lifting of the scorer (16) in the third direction (6), continuously measuring the thickness of the entire second cutting tooth (20) in the measuring plane (M).

8. The method according to claim 7 and further comprising the steps of:
storing a nominal profile of the second cutting tooth (20);
reconstructing an actual profile of the second cutting tooth (20) by means of the thicknesses of the second cutting tooth (20) measured in the measuring plane (M); and
comparing the actual profile with the nominal profile so as to determine irregularities and/or defects of the second cutting tooth (20).

9. The method according to any one of the preceding claims and further comprising the steps of:
lifting the cutting blade (16) in the third direction (6) through the measuring plane (M) so as to move the entire first cutting tooth (19) through the measuring plane (M); and
during the lifting of the cutting blade (16) in the third direction (6), continuously measuring the thickness of the entire first cutting tooth (19) in the measuring plane (M).

10. The method according to claim 9 and further comprising the steps of:
storing a nominal profile of the first cutting tooth (19);
reconstructing an actual profile of the first cutting tooth (19) by means of the thicknesses of the first cutting tooth (19) measured in the measuring plane (M); and
comparing the actual profile with the nominal profile so as to determine irregularities and/or defects of the first cutting tooth (19).

11. The method according to any one of the preceding claims, wherein the cutting blade (16) and/or the scorer (17) are stationary or rotate around the respective rotation axes (18).

12. A method according to any one of the preceding claims, wherein the cutting blade (16) and the scorer (17) are lifted in the third direction (6) in succession or simultaneously.

13. An apparatus for aligning a cutting blade (16) and a scorer (17) of a cutting machine for panels made of wood, plastic or the like comprising a cutting station (13), at least one pushing unit (22) to move at least one panel (2) along a support plane (P), through the cutting station (13) and in a first direction (4), and a cutting assembly (14) mounted in the cutting station (13) and comprising, in turn, a support carriage (15), which is movable in a second direction (7) and along a cutting plane (T) substantially perpendicular to the first direction (4) and supports a cutting blade (16) provided with a plurality of first cutting teeth (19) and a scorer (17) provided with a plurality of second cutting teeth (20), a first operating device to move the cutting blade (16), relative to the support carriage (15), in a third direction (6) orthogonal to said first and second directions (4, 7), a second operating device to move the scorer (17), relative to the support carriage (15), in the third direction (6) and a third operating device to move the scorer (17), relative to the support carriage (15), in the first direction (4), the apparatus comprising an optical system (28) to measure, in a measuring plane (M) parallel to, or coinciding with, the support plane (P), at least a thickness (S2) of a second cutting tooth (20) and a width (L) of the assembly defined by the cutting blade (16) and the scorer (17); and an electronic control unit (27) to control said first, second and third operating devices; the electronic control unit (27) being configured to implement the method according to any one of the preceding claims.
